## Europäisches Patentamt
## European Patent Office
## Office européen des brevets

(19)

(11) Veröffentlichungsnummer: **0 170 833**
**B1**

(12) **EUROPÄISCHE PATENTSCHRIFT**

(45) Veröffentlichungstag der Patentschrift: **30.01.91**

(51) Int. Cl.⁵: **G 01 K 7/20**

(21) Anmeldenummer: **85107400.5**

(22) Anmeldetag: **15.06.85**

(54) **Verfahren und Schaltung zur Feststellung und Überwachung der Temperatur der Wicklung einer Spule.**

(30) Priorität: **06.07.84 DE 3424873**

(43) Veröffentlichungstag der Anmeldung:
**12.02.86 Patentblatt 86/07**

(45) Bekanntmachung des Hinweises auf die
Patenterteilung:
**30.01.91 Patentblatt 91/05**

(84) Benannte Vertragsstaaten:
**CH DE FR GB LI**

(56) Entgegenhaltungen:
**DE-A-2 947 596**

**PATENTS ABSTRACTS OF JAPAN, Band 7, Nr.
73 (P-186)1218r, 25. März 1983; & JP-A-58 2625**

(73) Patentinhaber: **LEYBOLD
AKTIENGESELLSCHAFT
Bonner Str. 504
D-5000 Köln 51 (DE)**

(72) Erfinder: **Heinen, Raymond, Dr.
Scheffel-Strasse 13
D-5000 Köln 41 (DE)**

(74) Vertreter: **Leineweber, Jürgen, Dipl.-Phys.
Nagelschmiedshütte 8
D-5000 Köln 40 (DE)**

EP 0 170 833 B1

Courier Press, Leamington Spa, England.

# EP 0 170 833 B1

## Beschreibung

Die Erfindung bezieht sich auf ein Verfahren zum Betrieb eines Magnetventiles mit einem eine Spule umfassenden Anbtrieb zur Betätigung seines Verschlußgliedes, bei welchem die Spule zur Betätigung des Verschlußgliedes mit einem relativ großen Erregerstrom und während der übrigen Zeit mit einem relativ kleinen Haltestrom versorgt wird. Außerdem betrifft die Erfindung eine für die Durchführung dieses Verfahrens geeignete Schaltung für das Magnetventil.

Die Dimensionierung von Spulen, sei es für Elektromotoren, Magnetventile, Transformatoren oder dergleichen, hängt von dem jeweils durch die Wicklung der Spule fließenden Strom ab. Überschreitet der Strom für längere Zeit einen zulässigen Grenzwert, dann kan die damit verbundene Erwärmung der Wicklung zu Isolationsschäden führen. Um eine solche unzulässig hohe Erwärmung einer Spule zu verhindern, ist es bekannt (vgl. DE—OS—25 36 375), die Spulentemperatur mit Hilfe eines Temperaturfühlers abzutasten, der zugleich eine Sicherungsfunktion hat. Weiterhin ist es aus der DE—A—29 47 596 bekannt, die Temperatur der Schwingspule eines Lautsprechers dadurch anzuzeigen, daß durch die Spule ein mit der Amplitude des Schaltsignales veränderlicher Meßstrom hindurchgeschickt wird. Schließlich offenbart die JP—A—582625 die sequentielle Abtastung mehrerer Spulen zum Zwecke der Temperaturüberwachung.

Bei Spulen, die einer großen Lastdynamik unterliegen, ist es bekannt, diese kurzzeitig mit einer überhöhten Erregung zu betrieben, um auf unnötig große Wicklungen verzichten zu können. Diese Technik ist besondere bei Magnetventilen bekannt, die während einer Hubphase kurzzeitig einen hohen Erregungsstrom benötigen, während in der übrigen Zeit lediglich ein sogenannter Haltestrom erforderlich ist, der den Ventilstempel z.B. entgegen der Kraft einer Feder in einer bestimmten Position festhält. Die Überregung während der Hubphase dient in der Regel dazu, mehr Kraft zur Beschleunigung des Ventilstempels bereitstellen zu können, als zum Halten in einer bestimmten Position gebraucht wird.

Häufig müssen auch lastbedingte Hemmungen oder Zusatzkräfte möglichst schnell überwunden werden, die z.B. ihre Ursache in einer ungünstigen Hubkraft-Kennlinie des antriebenden Magneten haben können. Der Betrieb eines Magnetventiles mit kurzzeitig überhöhter Erregung führt zu einer besonders wirtschaftlichen Ausführung des Magneten, da sich seine Baugröße überwiegend nach der Halteerregung und der erforderlichen Zahl von Arbeitsspielen pro Zeiteinheit und nicht nach der Anzugserregung allein richten kann.

Der vorliegenden Erfindung liegt die Aufgabe zugrunde, ein Verfahren zum Betrieb eines Magnetventiles und eine dafür geeignete Schaltung vorzuschlagen, welche besonders einfach sind und zusätzlich Sensormittel, z.B. einen Temperaturfühler, nicht benötigen.

Erfindungsgemäß wird diese Aufgabe dadurch gelöst, daß zum Zwecke der Feststellung und/oder Überwachung der Temperatur der Wicklung der Spule als Meßgröße der von der Temperatur der Spulenwicklung abhängige Widerstand herangezogen wird und daß der Haltestrom als Meßstrom verwendet wird.

Da die Temperaturkoeffizienten der Widerstände der zum Aufbau der Magnetspulen verwendeten Drähte bekannt sind, kann der Widerstand bei bekanntem Haltestrom und bei bekannter, an der Wicklung abfallender Spannung als Maß für die Temperatur der Wicklung herangezogen werden. Ein gesonderter Temperaturfühler oder eine gesonderte Stromquelle zur Erzeugung des Meßstromes sind nicht erforderlich.

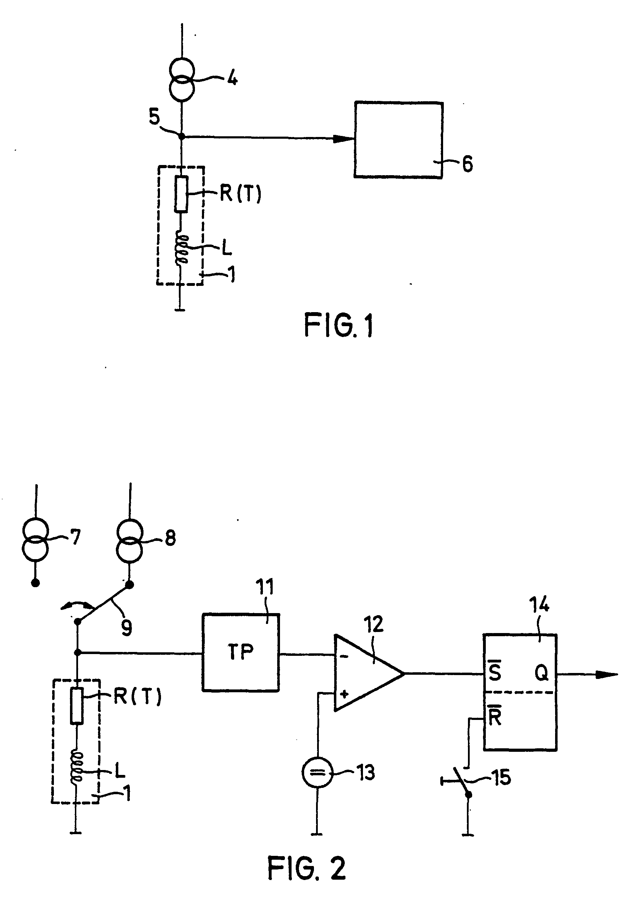

Weitere Vorteile und Einzelheiten sollen anhand von in den Figuren 1 bis 4 dargestellten Ausführungsbeispielen erläutert werden.

Figure 1 zeigt eine Prinzipskizze, in der — wie auch in den weiteren Figuren — für die auf ihre Temperatur zu überwachende Wicklung oder Spule 1 ein Ersatzbild gewählt ist, und zwar ein von der Temperatur abhängiger Widerstand R(T) und eine Induktivität L. Fließt aufgrund der Gleichstromquelle 4 ein Meßstrom $I_M$ durch die Wicklung 1, dann fällt über 1 eine bestimmte Spannung $U_M$ ab. Es gilt

$$U_M = R \cdot I_M$$

Die Widerstände der meisten zum Aufbau von Spulen verwendeten Drähte haben positive Temperaturkoeffizienten im Bereich einiger Promille pro Grad Kelvin. Kupfer hat z.B. je nach Art 3.9 bis 4.0 Promille pro Grad Kelvin.

Sie folgen im technisch interessierenden Bereich zwischen −50°C und +200°C ausreichend genau der Beziehung

$$R(T) = R_o(1 + \alpha_r(T - T_o))$$

$R(T)$ = Widerstand bei der Temperatur T
$R_o$ = Widerstand bei der Temperatur $T_o$
$\alpha_R$ = Temperaturkoeffizient des Widerstandes.

Die an der Spule abfallende Spannung ist somit bei bekanntem Strom selbst ein Maß für die Temperatur der Wicklung.

$$U_M(T) = I_M \cdot R_o(1 + \alpha_R (T-T_o))$$

Bei bekanntem $I_M$, $R_o$, $T_o$ und $\alpha_R$ kann aus $U_M(T)$ auf die Temperatur T geschlossen werden.

Der Meßstrom braucht kein reiner Gleichstrom zu sein. Er kann auch einen großen Wechselstromanteil enthalten (z.B. Strom aus einer Einweg- oder Zweiweg-Gleichrichterschaltung mit oder ohne Phasenanschnitt). Entscheidend ist, daß sein Mittelwert konstant gehalten wird.

Änderungen von $U_M$ können mittels einer generell als Block 6 dargestellten elektronischen Einrichtung überwacht werden, die in geeigneter Weise zu einer Warnmeldung oder Abschaltung führen kann.

Fig. 2 zeigt eine Ausführungsform, die insbesondere für die Temperaturüberwachung von Magnetventil-Spulen geeignet ist. Der Spule oder Wicklung 1 sind zwei Stromquellen 7 und 8 zugeordnet, die über den Schalter 9 wahlweise einschaltbar sind. Die Stromquelle 7 liefert einen hohen Erregerstrom, der während der Hubphase fließt. Eine kurzzeitige Übererregung ist dabei zulässig, solange die Temperatur der Spule ausreichend niedrig bleibt. Im Anschluß an die Hubphase wird auf die Stromquelle 8 umgeschaltet, die den Haltestrom liefert, also einen relativ kleinen, das Verschlußglied des Ventils in einer bestimmten Position haltenden Strom. Dieser Haltestrom kann gleichzeitig als Meßstrom $I_M$ verwendet werden, so daß aus der Spannung bei 5 auf die Temperatur der Spule 1 geschlossen werden kann.

Beim Ausführungsbeispiel nach Fig. 2 wird der Spannungswert $U_M$ bei 5 über einen Teifpaß 11 einem Schwellwert-detektor 12 zugeführt. Durch den Tiefpaß 11, welcher auch als Integrator ausgeführt werden kann, wird erreicht, daß der Spannungsabfall an R für eine Mindestzeit anliegen muß, bevor er den Schwellwertdetektor zur Auslösung bringt.

Sehr kurzzeitige Impulse, wie z.B. von der Selbstinduktion der Spule oder durch eine kurze Zeit der übererregung bedingt, wirken somit nicht oder nur sehr stark vermindert. Dem Schwellwertdetektor 12 liegt eine Vergleichsspannung an, die von der Spannungsquelle 13 erzeugt wird und dem maximalen Spannungswert $U_M$ (und damit der maximal zulässigen Temperatur T) entspricht. Der Schwellwertdetektor 12 betätigt seinerseits ein Störungs-Flipflop 14, das eine Warnmeldung oder eine Abschaltung bewirken kann. Mittels des Tasters 15 ist das Störungs-Flipflop 14 rückstellbar.

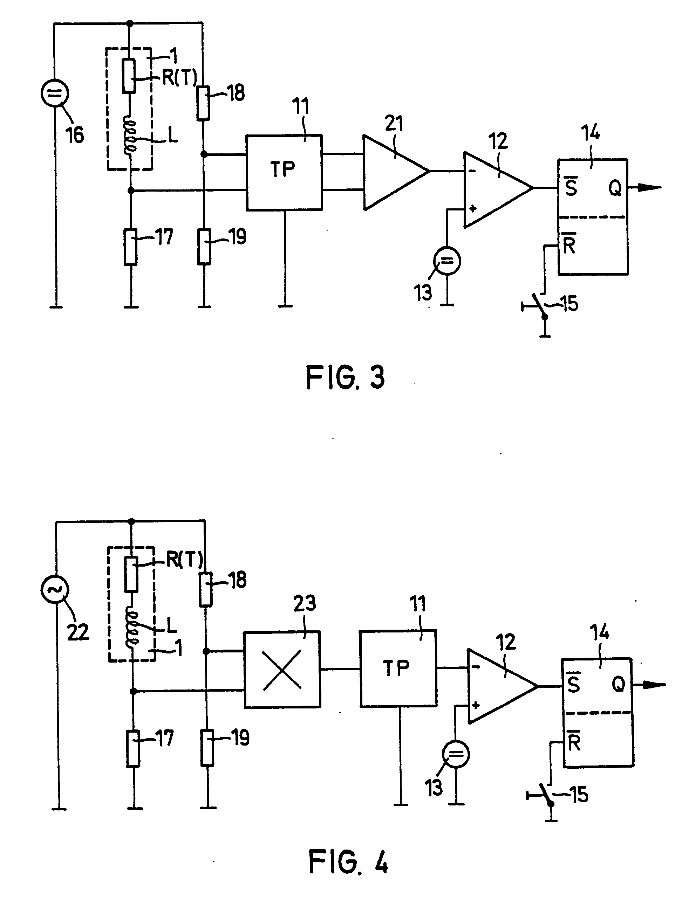

Fig. 3 stellt einen entsprechenden Aufbau bei Konstantspannungsspeisung der Wicklung 1 dar. Die Spannungsquelle ist mit 16 bezeichnet. Die Spule oder Wicklung 1 wird durch den Vorwiderstand 17 und die Widerstände 18 und 19 zu einer Brückenschaltung ergänzt. Der Temperaturkoeffizient der Widerstände 17 bis 19 liegt zweckmäßigerweise im Bereich einiger $10^{-5}$ pro Grad Kelvin, d.h., daß er zweckmäßigerweise um zwei Größenordnungen kleiner ist als der Temperaturkoeffizient der Kupferdrähte der Wicklung 1. Die Vergleichspunkte der Brückenschaltung stehen mit den Eingängen des Tiefpasses 11 in Verbindung. Dem Tiefpaß 12 bei diesem Ausführungsbeispiel zunächst ein Differenzverstärker 21, welcher die temperaturabhängige Brückenspannung auf ein neues Bezugspotential umsetzt. Die nachfolgenden Fuktionen (Schwellwertdetektor 12, Störungs-Flipflop 14 usw.) entsprechen dem Ausführungsbeispiel nach Fig. 2.

Anstelle der Gleichspannungsquelle 16 kann auch eine Mischspannungsquelle vorgesehen sein.

Fig. 4 zeigt schließlich ein Ausführungsbeispiel mit einer Wechselspannungsquelle 22 und einer nachfolgenden Brückenschaltung, wie sie in Fig. 3 dargestellt ist. Zur Detektion der Veränderung von R mit der Temperatur muß in dieser Schaltung zunächst der reine Wirkanteil des Stromes $I_M$ gebildet werden. Das geschieht mit Hilfe einer Multiplikationsstufe 23, deren Eingänge mit den Vergleichspunkten der Brückenschaltung verbunden sind. Diese Multiplikationsstufe 23 bewirkt die Multiplikation des stromproportionalen Signals, welches am Widerstand 17 abfällt, mit dem spannungsproportionalen Signal, welches am Widerstand 19 abfällt. Das gleiche könnte auch durch phasenempfindliche Gleichrichtung der Spannungssignale, die von den Widerständen 17 und 19 abhängen, bewirkt werden. Nach der Bildung des Wirkanteils des Stromes $I_M$ folgen wieder Tiefpaß 11, Schwellwertdetektor 12 und Störungs-Flipflop 14.

**Patentansprüche**

1. Verfahren zum Betrieb eines Magnetventils mit einem eine Spule (1) umfassenden Antrieb zur Betätigung seines Verschlußgliedes, bei welchem die Spule zur Betätigung des Verschlußgliedes mit einem relativ großen Erregerstrom und während des übrigen Zeit mit einem relativ kleinen Haltestrom versorgt wird, dadurch gekennzeichnet, daß zum Zwecke der Feststellung und/oder Überwachung der Temperatur der Wicklung der Spule (1) als Meßgröße der von der Temperatur der Spulenwicklung abhängige Widerstand herangezogen wird und daß der Haltestrom verwendet wird.

2. Für die Durchführung des Verfahrens nach Anspruch 1 geeignete Schaltung für ein Magnetventil mit einem eine Spule (1) umfassenden Antrieb zur Betätigung seines Verschlußgliedes, bei welchem die Spule zur Betätigung des Verschlußgliedes, bei welchem die Spule zur Betätigung des Verschlußgliedes mit einem relativ großen Erregerstrom und während der übrigen Zeit mit einem relativ kleinen Haltestrom versorgt wird, dadurch gekennzeichnet, daß die den Haltestrom liefernde Spannungs- oder Stomquelle (4, 8, 16, 22) mit der Wicklung der Spule (1) in Reihe geschaltet ist und daß zwischen der Spannungs- oder Stromquelle und der Wicklung eine elektronische Überwachungseinrichtung angeschlossen ist, welche einen Tiefpaß (11), einen Schwellwertdetektor (12) und einen Störungs-Flipflop (14) umfaßt.

3. Für die Durchführung des Verfahrens nach Anspruch 1 geeignete Schaltung für ein Magnetventil mit einem eine Spule (1) umfassenden Antrieb zur Betätigung seines Verschlußgliedes, bei welchem die Spule zur Betätigung des Verschlußgliedes mit einem relativ großen Erregerstrom und während der übrigen Zeit mit einem relativ kleinen Haltestrom versorgt wird, dadurch gekennzeichnet, daß die Stromquelle (16, 22) mit einer Brückenschaltung in Reihe geschaltet ist, welche einen von der Wicklung der Spule (1) und einem Vorwiderstand (17) gebildeten ersten Brückenzweig und einen von zwei Widerständen (18, 19) gebildeten zweiten Brückenzweig umfaßt, daß der Temperaturkoeffizient der Widerstände (17 bis 19) um zwei Größenordnungen kleiner ist als der Temperaturkoeffizient der Wicklung der Spule (1) und daß die Vergleichspunkte der Brückenschaltung mit den Eingängen eines Tiefpasses (11) in Verbindung steht, an dem sich ein Differenzverstärker (21), ein Schwellwertdetektor (12) und ein Störungs-Flipflop (14) anschließt.

4. Schaltung nach Anspruch 3, dadurch gekennzeichnet, daß die Spannungsquelle eine Wechselspannungsquelle (22) ist und daß zwischen den Vergleichspunkten der Brückenschaltung und dem Tiefpaß (11) eine Multiplikationsstufe (23) eingeschaltet ist.

**Revendications**

1. Procédé pour exploiter une électro-vanne comportant un mécanisme d'entrainement comprenant une bobine (1) pour activer son obturateur, procédé dans lequel la bobine est alimentée avec un courant d'excitation relativement important pour manoeuvrer l'obturateur et avec un courant de maintien relativement faible pendant le reste du temps, caractérisé par le fait que dans le but de déterminer et/ou de surveiller la température du bobinage de la bobine (1) on fait appel, comme grandeur de mesure, à la résistance, fonction de la température du bobinage de la bobine, et par le fait que l'on emploie le courant de maintien comme courant de mesure.

2. Circuit convenant pour l'exécution du procédé selon la revendication 1 pour une électro-vanne comportant un mécanisme d'entrainement comprenant une bobine (1) pour activer son obturateur, procédé dans lequel la bobine est alimentée avec un courant d'excitation relativement important pour manoeuvrer l'obturateur et avec un courant de maintien relativement faible pendant le reste du temps, caractérisé par le fait que la source de tension ou de courant (4, 8, 16, 22) qui fournit le courant de maintien est montée en série avec le bobinage de la bobine (1) et par le fait qu'entre la source de tension ou de courant et le bobinage est relié un dispositif électronique de surveillance qui comprend un filtre passe-bas (11), un détecteur à valeur de seuil (12) et une bascule électronique pour incident (14).

3. Circuit convenant pour l'exécution du procédé selon la revendication 1 pour une électro-vanne comportant un mécanisme d'entrainement comprenant une bobine (1) pour activer son obturateur, procédé dans lequel la bobine est alimentée avec un courant d'excitation relativement important pour manoeuvrer l'obturateur et avec un courant de maintien relativement faible pendant le reste du temps, caractérisé par le fait que la source de courant (16, 22) est montée en série avec un circuit en pont qui comprend une première branche du pont formée par la bobinage de la bobine (1) et par une prérésistance (17) et une seconde branche du pont formée par deux résistances (18, 19); par le fait que le coefficient de température des résistances (17 à 19) est, de deux puissances de dix, inférieur au coefficient de température du bobinage de la bobine (1); et par le fait que les points de comparaison du circuit en pont sont reliés aux entrées d'un filtre passe-bas (11) auquel se raccordent un amplificateur différentiel (21), un détecteur à valeur de seuil (12) et une bascule électronique pour incident (14).

4. Circuit selon la revendication 3, caractérisé par le fait que la source de tension est une source de tension alternative (22) et par le fait qu'entre les points de comparaison du circuit en pont et le filtre passe-bas (11) est mis en circuit un étage multiplicateur (23).

**Claims**

1. Method of operating a solenoid valve having a drive, which comprises a coil (1), for actuating its closure element, wherein the coil for actuating the closure element is supplied with a relatively high excitation current and during the remaining time is supplied with a relatively low holding current, characterised in that in order to determine and/or monitor the temperature of the winding of the coil (1), the resistance which is dependent upon the temperature of the coil winding is used as a measured variable and that the holding current is used as a testing current.

2. Circuit suitable for effecting the method according to claim 1 or a solenoid valve having a drive, which comprises a coil (1), for actuating its closure element, wherein the coil for actuating the closure element is supplied with a relatively high excitation current and during the remaining time is supplied with a relatively low holding current, characterised in that the voltage or current source (4, 8, 16, 22) supplying the holding current is connected in series to the winding of the coil (1), and that there is connected between the voltage or current source and the winding an electronic monitoring device which comprises a low pass (11), a threshold detector (12) and a fault flipflop (14).

3. Circuit suitable for effecting the method according to claim 1 for a solenoid valve having a drive, which comprises a coil (1), for actuating its closure element, wherein the coil for actuating the closure element is supplied with a relatively high excitation current and during the remaining time is supplied with a relatively low holding current, characterised in that the current source (16, 22) is connected in series to a bridge circuit comprising a first bridge branch, which is formed by the winding of the coil (1) and a series resistor (17), and a second bridge branch, which is formed by two resistors (18, 19), that the temperature coefficient of the resistances (17 to 19) is two orders of magnitude lower than the temperature coefficient of the winding of the coil (1), and that the reference points of the bridge circuit are connected to the inputs of a low pass (11) to which a differential amplifier (21), a threshold detector (12) and a fault flipflop (14) are connected.

4. Circuit according to claim 3, characterised in that the voltage source is an alternating voltage source (22), and that a multiplication stage (23) is inserted between the reference points of the bridge circuit and the low pass (11).

FIG.1

FIG. 2

1

FIG. 3

FIG. 4